# EUROPEAN PATENT APPLICATION

(11) **EP 4 141 064 A1**
(43) Date of publication of application: **01.03.2023**
(21) Application number: 20932583.6
(22) Date of filing: 08.07.2020
(51) Int. Cl.: C08L 17/00, C08J 11/04, C08L 95/00

(54) **LOW-TEMPERATURE METHOD OF PRODUCING MODIFIED RUBBER CRUMB**

(30) Priority: 20.04.2020 RU 2020114181
(71) Applicant: Vorobev, Andrei Leonidovich, Moscow, 117485 (RU)
(72) Inventor: Vorobev, Andrei Leonidovich, Moscow, 117485 (RU)
(74) Representative: Ex Materia
(86) International application number: PCT/RU2020/000338
(87) International publication number: WO 2021/215956

(57) **Abstract**

The invention relates to the field of road construction materials, and it is intended to improve the quality of road surfaces, roofing and insulating materials based on bitumens, which is achieved by improving the quality of bitumens with the help of using modified crumb rubber - a disposal product of used automotive and tractor tires, in particular, the invention relates to a low-temperature method for manufacturing modified crumb rubber to improve the quality of bitumens and asphalt concretes and to the technology for mixing it with bitumen, for the purpose of creating a uniform material that is not prone to destruction during long-term storage. The present invention consists in the development of a new method for manufacturing the modified crumb rubber, comprising
- preparing a mix from the following components: crumb rubber from used automotive and tractor tires with a particle size of up to 1 mm - 50-65 wt.%, oxides and/or hydroxides of alkaline-earth metals - 10-20 wt.%, petroleum oil of solvent refining with the viscosity of from 0.05 to 1.5 Pa*s at 60 °C - 20-30 wt.%, an amine type antiageing agent - a heterocyclic nitrogen-containing compound - 0.1-2.0 wt.%;
- mixing the components of the resulting mix with a shock-shear load on the material in a mixer-activator at a temperature of 80-120 °C;
and further cooling the resulting mix to a room temperature.

## Description

### TECHNICAL FIELD

The invention relates to the field of road construction materials, and it is intended to improve the quality of road surfaces, roofing and insulating materials based on bitumens, which is achieved by improving the quality of bitumens with the help of using modified crumb rubber - a disposal product of used automotive and tractor tires, in particular, the invention relates to a low-temperature method for manufacturing modified crumb rubber to improve the quality of bitumens and asphalt concretes and to the technology for mixing it with bitumen, for the purpose of creating a uniform material that is not prone to destruction during long-term storage.

### PRIOR ART

One of the main applications of bitumen is its use as a binder in asphalt mixes, where bitumen is mixed with mineral aggregates having various sizes, shapes and a chemical formulation. These asphalt concrete mixes are used, in particular, for the construction or maintenance of sidewalks, roads, various service roads and any other surfaces.

Unfortunately, some properties of the bitumen, obtained as the heaviest fraction of an oil distillation process, make it difficult to use it as a material for road surfaces due to a number of factors.

For example, bitumen and its formulations must comply with the well-defined specifications with the respect to certain properties, such as stiffness, permeability, and viscosity. The non-compliance of the bitumen with one or more of these requirements makes it unacceptable for using as a road construction material.

To change some properties of the standard bitumens, an additive of some active substances, such as polymers, may be used. The main used polymer - block-polymer styrene-butadienestyrene (SBS) - acts to increase the softening temperature of a bituminous binder, which increases flexibility and plasticity at low temperatures and allows using it in a wider temperature range compared to the conventional, unmodified binders based on bitumen.

There are a lot of other so-called bitumen modifiers, but generally they are not equally effective in terms of various aspects of the bitumen properties, and they are also very expensive.

The disadvantage of the many modern asphalt concrete mixes, such as, for example, SMA or open graded asphalt, is the draindown of the bitumen during transportation.

The SMA mixes have a high thickness of a binding bituminous film (6-7% by weight of the mix). A high content of a bituminous binder and a filler (compared to dense-graded mixes) leads to an increased tendency of the bituminous binder to drainage along the filler skeleton. An uneven distribution of the bituminous binder due to its draindown can lead to the formation of the areas having a low content of the bituminous binder and a decrease in permeability in the areas with the accumulation of the bituminous binder.

In this regard, it becomes necessary to add stabilizing additives such as sisal, plastic waste, cellulose and some other fibers to increase the bitumen stiffness for the purpose of reducing the drainage of the mix at high temperatures and obtaining a more even distribution of binders, what increases the service life of a road surface.

Currently, many composition formulations for manufacturing bitumens and asphalt concretes with the use of crumb rubber, as well as the methods for its modification, are also known.

In particular, the development of the state of the art within the framework of the research of such compositions and the methods for their manufacture can be observed from the following US patent sources: US 4992492 A, published on 12.02.1991; US 5217530 A, published on 08.06.1993; US 5501730 A, published on 26.03.1996; US 5683498 A, published on 04.11.1997; US 6562118 B2, published on 13.05.2003; US 7811373 B2, published on 12.10.2010; US 8114926 B2, published on 14.02.2012; US 8344049 B2, published on 01.01.2013; US 8926742 B2, published on 06.01.2015; US 9102834 B2, published on 11.08.2015; US 9487633 B2, published on 08.11.2016; US 9862829 B2, published on 09.01.2018; US 10000638 B2, published on 19.06.2018.

For example, from patent US 5683498 A, published on 04.11.1997, a composition is known, wherein the crumb rubber from car tires is exposed to thermal-oxidative destruction at 300 °C, conceiving that the resulting material has advantages over environmentally harmful aliphatic or aromatic hydrocarbons introduced into asphalt mixes.

The disadvantage of this composition is that the caoutchouc composed in the rubber is completely destroyed at 300 °C, which leads to the liquefaction of the bitumen and the deterioration of the performance characteristics of the rubber, hence to the impossibility of the long-term storage of the mix.

Patent RU 2458083 C1, published on 10.08.2012, is known among the patents of the Russian Federation, wherein an invention is disclosed, which relates to road construction materials, in particular to a modifying composition, which includes from 60 to 75 wt.% of an active rubber powder with a particle size of up to 1 mm, a filler being grinded mica or a grinded mica mix (phlogopite or muscovite) and/or diatomite, containing from 15 to 25 wt.% of grinded mica and from 5 to 10 wt.% of diatomite, from 1.0 to 2.5 wt.% of an adhesive, and from 1.0 to 2.5 wt.% of a texturing additive. In this case, the active rubber powder is a rubber powder with a developed specific surface area prepared by thermomechanical grinding, or a rubber powder chemically activated by petroleum oil, or a mix thereof. The composition is prepared by grinding the adhesive and the texturing additive to obtain a size of up to 0.8 mm. Thereafter, the resulting mix is combined with the fillers and the active rubber powder. Then, the mix is mixed thoroughly. The composition is used as a stabilizing additive for asphalt concrete mixes. The result is an improvement in the performance characteristics of the asphalt concrete surfaces, when the commonly manufactured rubber powder with the low specific surface area is used in them.

From source RU 2655334 C2, published on 25.05.2018, a method for preparing a composite rubber-bitumen binder is known, which consists in the preliminary thermomechanical processing of the crumb rubber of a size of up to 1.5 mm in an amount of from 30 to 60 wt.% in the medium of the bitumen petroleum road viscous of BND 60/90 grade or BND 90/130 grade in an amount of from 30 to 60 wt.% and petroleum oil with an aromatic hydrocarbon content of at least 50 wt.% in an amount of from 10 to 25 wt.% to obtain a concentrated suspension of a rubber-bitumen composite, with subsequent thermomechanical mixing the concentrated suspension of the rubber-bitumen composite in an amount of from 30 to 60 wt.% with the bitumen petroleum road viscous of BND 60/90 grade or BND 90/130 grade in an amount of from 40 to 70 wt.%. The technical result of the invention is to expand the range of the bitumen-rubber compositions with the improved physical and chemical characteristics (a reduced brittleness temperature, a high softening temperature and elasticity, good adhesion with the surface of stone materials, concretes, metals and other materials) prepared in bitumen boilers equipped with a mixing device, which do not contain the components having a hazard class by degree of impact on the human body that is higher than that of the original petroleum bitumen.

From source RU 2509787 C2, published on 20.03.2004, a composition is known, which includes bitumen, crumb rubber from grinded used car tires with a particle size of up to 1 mm and petroleum oil with a viscosity of 0.005-1.6 Pa•s at 60 °C. The ratio of the components is as follows, wt.%: crumb rubber - 8-20, petroleum oil - 2-12, bitumen - the rest. The invention also relates to a method for preparing the specified composition. The final product has increased adhesion with the road surface, increased resistance to cracking at low temperatures, improved adhesion at subzero temperatures, increased elasticity in the heavy traffic conditions.

The specified technical result is achieved in the method for preparing a bitumen-rubber binder for the road surface, which includes heating the bitumen to a temperature of 185-220 °C, introducing petroleum oil with a viscosity of 0.005-1.6 Pa•s at 60°C in an amount of 2-10 wt.% and crumb rubber from used car tires with a particle size of up to 1 mm in an amount of 8-20 wt.%, while mixing constantly during 2-5 hours at a constant temperature of 185-220 °C.

From source RU 2164927 C2, published on 10.04.2001, an invention is known, which relates to preparing bitumen-rubber compositions from bitumen and crumb rubber from amortized tires and other wastes of vulcanized rubber. Bitumen-rubber compositions (BRC) are used as binders for waterproofing materials and asphalt mixes. The essence of the invention is in that a bitumen-rubber composition is provided, which includes bitumen and crumb rubber from vulcanized rubber, as well as an organic and/or inorganic base with the following ratio of components, wt.%: bitumen - 100, crumb rubber - 10-50, an organic and/or inorganic base - 0.01-2.5, with the exception of calcium carbonate, which amount, when using only the inorganic base, is 0.05-2 wt.%. As the organic base, aromatic or heteroaromatic amines or phosphines are used, and as the inorganic base, carbonates of alkaline or alkaline-earth metals are used. A method for preparing the bitumen-rubber composition, comprising mixing bitumen and crumb rubber, consists in that bitumen, crumb rubber, an organic and/or inorganic base are placed simultaneously in a hermetic reactor in the specified ratios, with the exception of calcium carbonate, which amount, when using only the inorganic base, is 0.05-2 wt.%, and mixed at a temperature of 160-230 °C. The BRC provided has an increased softening temperature and extensibility, reduced penetration, as well as a brittleness temperature and moisture absorption, and the method for preparing it is high-performance and environmentally friendly.

From patent RU 2632698 C1, published on 09.10.2017, a modifying composition for an asphalt concrete mix is known, which can be used in the construction of road surfaces, bridges, airdromes and hydraulic facilities. The modifying composition contains an active rubber powder, a filler, which is a mix of grinded mica and diatomite, adhesive, a texturing additive and a still residue of polyfluorinated alcohols-telomeres with the following ratio of components, wt.%: an active rubber powder - 60-75, grinded mica - 15-25, diatomite - 2-9, adhesive - 1-3, a texturing additive - 1-3, a still residue - 0.5-1.5. The invention also relates to the asphalt concrete mix containing mineral materials, bitumen and the modifying composition in an amount of from 0.3 to 0.7 wt.% with respect to the total weight of the mineral material. The use of the modifying composition leads to an improvement in the physical and mechanical characteristics of asphalt concrete.

This composition has a number of disadvantages, such as: low economic efficiency, the complexity of introducing resins (technological difficulties and the need for special equipment), possible destruction of a part of the components (destruction) when mixed with bitumen, which leads to a sharp unpleasant smell and environmental problems - the release of harmful substances into the atmosphere.

In other publications listed above, related to the non-sufficient use of crumb rubber in bitumens, a number of peculiarities of rubber and bitumen are considered. Firstly, it is necessary to take into account the fact that the crumb rubber is a secondary product and for this reason it has a large range of initial indicators. They differ in a formulation, in the method of crushing, in the degree of aging, etc. Taking into account all these facts, the reproducibility of the research results with the use of crumb rubber remains doubtful. And, as it is known, any research can have scientific and/or practical significance, only if stable reproducibility and repeatability of the results are achieved. If to add here the fact that the bitumens prepared from the oil of different fields have different group formulations, then the probability of reproducing the results achieved by some researchers by other researchers is extremely coming down.

Secondly, there is no differentiation between the concepts of "rubber destruction" and "rubber devulcanization" in the literature. Meanwhile, these processes have opposite impacts on the performance characteristics of bitumen. If as a result of devulcanization, that is, the destruction of the rubber stiff base by destroying the sulfur bonds, the intact caoutchouc macromolecules pass into the bitumen, which improve the bitumen quality, then, as a result of the destruction, the caoutchouc composed in the rubber is destroyed by the carbon bonds and as a result, the low-molecular caoutchouc passes into the bitumen, which liquefies the bitumen and thereby reduces its quality.

One of the closest methods to the claimed invention is the method in accordance with patent RU 2655334 C2, wherein the crumb rubber of a size of up to 1.5 mm, having the temperature that corresponds to an ambient temperature, in an amount of from 30 to 60 wt.% is added to the medium of petroleum bitumen in an amount of from 30 to 60 wt.% and any petroleum oil with an aromatic hydrocarbon content of at least 50 wt.% in an amount of from 10 to 25 wt.%, which has been heated in a bitumen boiler, while mixing constantly to a temperature of 200-210 °C, after which the temperature of the mix is being brought up to 195-205 °C during 15-30 minutes, and the mix is being continuously mixed during 1.5-2.0 hours to form a concentrated suspension of a rubber-bitumen composite.

The disadvantage of this method is the use of a temperature of 200 °C, which is destructive for rubber. At such temperatures, the three-dimensional network of the caoutchouc cross-linked by sulfur is destroyed along the sulfur bonds and along the main chain of the caoutchouc - along the carbon bonds, what conceptually makes impossible the process of the further homogeneous combination of the caoutchouc with the bitumen and, as a consequence, there is a rapid degradation of the mix, which leads to the impossibility of long-term storage.

In addition, the resulting suspension is practically not suitable for transportation, which narrows sharply the possibility of its use.

In addition, the disadvantages of this composition and the method for preparing it are the complex technological process of multiple feedings and heating, while mixing intensively, which result in the complete oxidative destruction of the polymer chains in the rubber, what, like adding oil to the composition, leads to the deterioration of the strength characteristics of a finished product.

Another technical solution, which is close in its essence to the claimed invention is the one disclosed in patent RU 2164927C2. The inventors provide adding the inorganic and/or organic bases to bitumen together with crumb rubber.

However, the provided method for preparing the composition is very complex and time-consuming. Moreover, the process of preparing the composition is carried out in a hermetic space, which also creates certain difficulties. Furthermore, the addition directly to the bitumen (in the claimed invention, the bitumen is added to the crumb, before mixing with the bitumen, the modifying components are introduced into each crumb particle) of the above components does not guarantee that all the crumb particles will undergo the necessary chemical reaction equally, the reaction will take place on the surface of the particles, and not over the entire volume. As a result, the chances of preparing a homogeneous mix are extremely little and the probability of occurring bifurcation uncontrolled processes is high, which leads to unpredictable and unstable quality of the material and, subsequently, the quality of the bitumen mix.

It is worth noting that in all the above sources, as well as in other well-known research works in this art, the issue of eliminating the sharp unpleasant smell of rubber at the manufacture of bituminous or asphalt mixes is not considered at all. Meanwhile, the unpleasant smell of rubber-bitumen binders is a serious obstacle to the widespread introduction of this material. In addition, no emphasis is made or evidence is given regarding a need for mixing the activated crumb with bitumen at a relatively low temperature range of 160-170 °C. According to the inventors, such mixing range allows introducing long, non-destroyed caoutchouc molecules into the mix with bitumen and obtaining a stable, resistant to destruction, uniform, economically more advantageous composition. And the most important thing is that nothing is said on a need to maintain a relatively low-temperature regime at the manufacture of the activated crumb - up to 120 °C, since this regime, on the one hand allows introducing into each crumb particle in fact equal number of the chemical components (i.e. this temperature is sufficient to open the pores of the rubber), on the other hand, it does not allow occurring the chemical process of overvulcanization and premature destruction in the crumb rubber, which keeps the material dry, non-caked and suitable for long-term storage, transportation, and when used further, effective for the introduction into the bitumen or asphalt mix.

The analysis of the results contained in the prior art shows that the researchers have not provided enough initial data for the multiple reproduction of some particular result. For example, in some research, the particle sizes of the crumb rubber (see RU 2164927) are not shown, while it is proven that this feature is essential. In another patent (see US 4992492), using the low-molecular caoutchouc as an additive, when dissolving crumb rubber, is provided. However, such complication of the system can lead to bifurcation phenomena, when under the same initial conditions, the final results that differ enormously are obtained.

### DISCLOSURE OF THE INVENTION

The present invention allows remedying the disadvantages of the prior art.

It should be noted that one of the important advantages of the claimed invention is the use of the temperatures reduced up to 120 °C compared to the traditional technologies, as well as the possibility of using various combinations of ingredients in a fairly wide range of percentages of each of them, in particular, good results are achieved even without the use of accelerators and/or vulcanization activators. The examples of implementation of the invention, showing a concrete content of the components of the mix in wt.%, at which the optimal results are achieved, both from a technical point of view and an economic point of view, are shown in the description section "Detailed Description of the Embodiments."

It is known that rubber is poorly soluble in bitumen, active mixing during at least 3 hours at a temperature of above 185 °C is traditionally required, the use of a colloid mill, which in fact grinds crumb rubber, thereafter the latter creates a mostly mechanical mix with bitumen, which is not intended to be stored for a long time, and often - for a short time (more than 4 hours). This mix is extremely non-uniform and it delaminates quickly.

To dissolve rubber in bitumen, it is necessary to break the cross-linked sulfur bonds between the caoutchouc macromolecules, while it is desirable to prevent the destruction of the caoutchouc macromolecules along the carbon-carbon bonds, that is, it is necessary to carry out selective rubber devulcanization in the bitumen solution mainly along the sulfur bonds, without affecting the carbon-carbon bonds.

In this case, the conditions for combining the free sulfur radicals with the active double bonds of the constituent components of bitumen are created.

The destruction of the caoutchouc macromolecules (the devulcanization along the carbon-carbon bonds) leads to the fact that the caoutchouc macromolecules with a very large range of the molecule lengths pass into bitumen. This process is extremely undesirable, since the caoutchouc with a low molecular weight leads to a reduction in a number of the important properties of bitumen, for example, to the reduction in a softening temperature and a loss of control over a dissolution process, i.e., the inability to block a bifurcation process.

Therefore, an important technical task is to create the conditions, when the intact molecules pass into caoutchouc, or, in other words, the conditions for the selective cleavage of the sulfur bonds are created.

The advantages of the claimed invention are as follows:
- simplifying the process of manufacturing a composition and reducing the economic costs for its implementation due to the use of the reduced temperatures in the claimed method - up to 120 °C;
- preparing a uniform composition that is not prone to degradation and coking, which has a long shelf life, while the viscosity of the mix is not increased during storage;
- eliminating a sharp unpleasant smell of rubber that occurs in the current technologies in the process of dissolving crumb rubber in bitumen and in asphalt concrete mix prepared on its basis;
- improving significantly the bitumen quality indicators, which are improved with the help of the crumb rubber modified by the claimed method, in particular, the temperature range of the bitumen performance is expanding greatly, elasticity is increased, bitumen adhesion to the mineral fillers of asphalt concrete is increased;
- increasing resistance to rutting and cracking of the asphalt concrete mixes manufactured on the basis of the modified crumb rubber, compared with the mixes manufactured on conventional bitumen;

In addition, the modified crumb rubber not only improves the bitumen properties, but also serves as a stabilizer, which leads to a reduction of the price for asphalt concrete.

Thus, the technical result of the present invention consists in obtaining an improved quality of the modified crumb used for mixing it with bitumen to form the mix that is not prone to destruction during long-term storage, and that also does not have an unpleasant toxic smell.

The technical result is achieved due to a new method for manufacturing the modified crumb rubber, comprising
- preparing a mix from the following components: crumb rubber from used automotive and tractor tires with a particle size of up to 1 mm - 50-65 wt.%, oxides and/or hydroxides of alkaline-earth metals - 10-20 wt.%, petroleum oil of solvent refining with the viscosity of from 0.05 to 1.5 Pa•s at 60 °C - 20-30 wt.%, an amine type antiageing agent - a heterocyclic nitrogen-containing compound - 0.1-2.0 wt.%;
- mixing the components of the resulting mix with a shock-shear load on the material in a mixer-activator at a temperature of 80-120 °C;
   and further cooling the resulting mix to a room temperature.

In this case, the oxides and hydroxides of the alkaline-earth metals are selected from a group of CaO, MgO, Ca (OH)₂.

At the same time, the amine-type antiageing agent is selected from a group of the heterocyclic nitrogen-containing compounds, in particular, neozone D, irganox, and diafene FP.

In this case, the mix contains additionally a vulcanization accelerator of a guanidine class selected from a group of guanidine, diphenylguanidine in an amount of 0.2-5.0 wt.%.

In this case, the mix contains additionally a vulcanization activator selected from a group of stearic acid, oleic acid, and the zinc and calcium salts thereof in an amount of 2.0-3.0 wt.%.

The above and other tasks, peculiarities, advantages, as well as the technical significance of this invention will be clearer from the following detailed description of the invention with a reference to the accompanying figures.

### BRIEF DESCRIPTION OF THE FIGURES

Figure 1 shows the reaction chemical mechanism illustrating a principle of the rubber modification.
Figure 2 shows the photographs from a microscope, wherein the process of dissolving 10% of the modified crumb in the bitumen of BND 60/90 grade in time is shown.
Figure 3 shows a graph of the viscosity change of the mix prepared by the claimed method, depending on time.

### DETAILED DESCRIPTION OF THE EMBODIMENTS

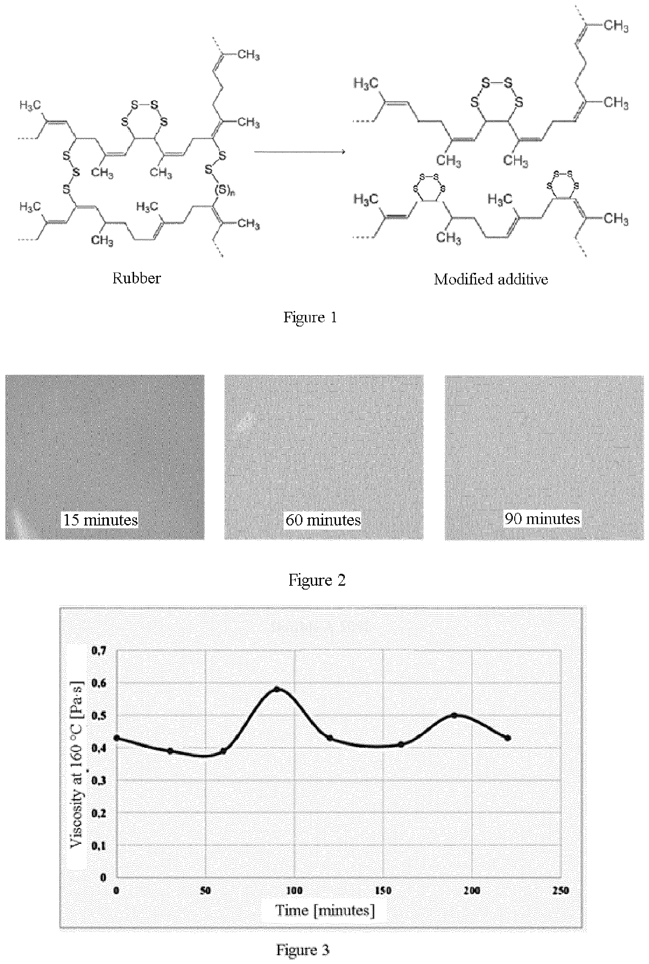

Figure 1 illustrates the principle of the rubber modification, when it is introduced into the bitumen, after which the process of its dissolution occurs.

Figure 2 illustrates the photographs made with the help of a special Zeiss AXIO SCOPE.A1 microscope with an N-Achroplan 40x/0.65 lens at 400x magnification, which show a course of the dissolution of 10% of the modified crumb in the bitumen of BND 60/90 grade in time after 15, 60 and 90 minutes from the process start. As can be seen, practically full homogeneity of the mix is achieved already by the 90th minute, what is also illustrated by the graph shown at Figure 3.

The dissolution of the modified crumb in the bitumen to obtain the indistinguishable particles is provided under the mild conditions, that is, at the temperatures of up to 160-170 °C. Without applying a mechanical action, which reduces significantly the cost of the required equipment and reduces the costs of the technological process.

Figure 3 shows a graph of the viscosity change of the mix depending on time. As the graph shows, the mix viscosity is much less than the bitumen viscosity with the conventional rubber, while a rapid viscosity reduction occurs at 80-90th minute, which is absolutely not typical for the conventional rubber (the conventional rubber, with this concentration, has in fact a line graph of the viscosity increase, with the formation of a site with a size of about 3 Pa•s), which is an experimental evidence of a high degree of the mix homogenization. At the same time, it should be noted that mixing the bitumen with this activated crumb should be carried out mainly in a temperature range of 80-120 °C to create the conditions for the transition of the long caoutchouc molecules into the mix at a low activation of the mix.

This mixing process also afford distinguishing this material from the possible fakes, since the conventional crumb rubber is not conceptually dissolved at such temperatures with a weak activation (a low speed of mixing).

During the preliminary preparation and activation of the crumb rubber, a number of components are introduced, one of which (petroleum oil of solvent refining with the viscosity of from 0.05 to 1.5 Pa•s at 60 °C) leads to effective swelling of the crumb rubber, which at a molecular level leads to a separation of the caoutchouc macromolecules from each other. This makes it possible to reduce significantly the probability of the formation of new cross-linked sulfur bonds during the dissolution process.

Another component (the amine-type antiageing agent, which can be selected from the group of different heterocyclic nitrogen-containing compounds, neozone D, irganox, and diafene FP) cleaves selectively the sulfur bonds, while this component does not in fact affect the carbon-carbon bonds.

The distinctive feature of the claimed method is the optimal selection of the components in such a way that their percentage ratio in the course of the activation of the crumb rubber would exclude a bifurcation process (this process is characteristic of the chemical reactions in the complex systems, where oppositely directed processes can occur simultaneously).

Thus, the possibility of occurring the uncontrolled processes that are opposite to the dissolution is excluded.

As a result, the claimed method provides obtaining an unidirectional, predictable, reproducible, relatively simple, low-temperature and economically more advantageous process for modifying the crumb rubber.

The creation of the mix is carried out by active mixing the components with the shock-shear load on the material in the mixer-activator at the temperatures optimally of 80-120 °C and with further cooling the resulting mix to a room temperature before packaging.

The optimal mixing temperature in the specified range is selected empirically depending on:
- the chemical composition of the crumb rubber;
- the ratio of the crumb rubber particles from tires for cars and trucks;
- the technology for grinding the crumb rubber;
- a specific surface area.

At the same time, it should be taken into account that the lower mixing temperatures (up to 80 °C) will lead to a non-full absorption of the bulk components and petroleum oil by the crumb.

A mixing temperature of more than 120 °C will lead to the beginning of a chemical reaction in the material, smoke emission, the material will be segregating, it will become unsuitable for long-term storage and transportation, in the future, it will not be mixed effectively with bitumen, it will not form a completely homogeneous mix suitable for long-term storage.

### EMBODIMENT EXAMPLES OF THE INVENTION

### Example 1

At a preliminary stage, a mix is prepared, which includes the following components:
- crumb rubber from used automotive and tractor tires with a particle size of up to 1 mm - 60 wt.%,
- building lime (CaO+MgO -75:25%) - 15 wt.%,
- petroleum oil of solvent refining with the viscosity of from 0.05 to 1.5 Pa•s at 60 °C - 24.4 wt.%;
- neozone D - 0.6 wt.%.

Then comes mixing the components of the resulting mix with the shock-shear load on the material in the mixer-activator at a temperature of 80 °C;
After obtaining a uniform homogeneous resulting mix, it is cooled to a room temperature.

### Example 2

At a preliminary stage, a mix is prepared, which includes the following components:
- crumb rubber from used automotive and tractor tires with a particle size of up to 1 mm - 50 wt.%,
- MgO+Ca(OH)₂ (-25:75%) - 20 wt.%,
- petroleum oil of solvent refining with the viscosity of from 0.05 to 1.5 Pa•s at 60 °C - 28.0 wt.%;
- irganox - 2.0 wt.%.

Then comes mixing the components of the resulting mix with the shock-shear load on the material in the mixer-activator at a temperature of 120 °C;
After obtaining a uniform homogeneous resulting mix, it is cooled to a room temperature.

### Example 3

At a preliminary stage, a mix is prepared, which includes the following components:
- crumb rubber from used automotive and tractor tires with a particle size of up to 1 mm - 65 wt.%,
- MgO - 10 wt.%,
- petroleum oil of solvent refining with the viscosity of from 0.05 to 1.5 Pa•s at 60 °C - 20.0 wt.%;
- diafene FP - 0.1 wt.%;
- guanidine - 4.9 wt.%.

Then comes mixing the components of the resulting mix with the shock-shear load on the material in the mixer-activator at a temperature of 90 °C;
After obtaining a uniform homogeneous resulting mix, it is cooled to a room temperature.

### Example 4

At a preliminary stage, a mix is prepared, which includes the following components:
- crumb rubber from used automotive and tractor tires with a particle size of up to 1 mm - 55 wt.%,
- CaO+MgO+Ca(OH)₂~50:25:25%) - 10 wt.%,
- petroleum oil of solvent refining with the viscosity of from 0.05 to 1.5 Pa•s at 60 °C - 30.0 wt.%;
- irganox - 0.8 wt.%.
- diphenylguanidine - 4.2 wt.%.

Then comes mixing the components of the resulting mix with the shock-shear load on the material in the mixer-activator at a temperature of 80 °C;
After obtaining a uniform homogeneous resulting mix, it is cooled to a room temperature.

### Example 5

At a preliminary stage, a mix is prepared, which includes the following components:
- crumb rubber from used automotive and tractor tires with a particle size of up to 1 mm - 50 wt.%,
- Ca(OH)₂ - 20 wt.%,
- petroleum oil of solvent refining with the viscosity of from 0.05 to 1.5 Pa•s at 60 °C - 20.0 wt.%;
- diafene FP - 2.0 wt.%;
- guanidine - 5.0 wt.%;
- stearic acid - 3.0 wt.%.

Then comes mixing the components of the resulting mix with the shock-shear load on the material in the mixer-activator at a temperature of 100 °C;
After obtaining a uniform homogeneous resulting mix, it is cooled to a room temperature.

### Example 6

At a preliminary stage, a mix is prepared, which includes the following components:
- crumb rubber from used automotive and tractor tires with a particle size of up to 1 mm - 65 wt.%,
- MgO - 10 wt.%,
- petroleum oil of solvent refining with the viscosity of from 0.05 to 1.5 Pa•s at 60 °C - 20.0 wt.%;
- diafene FP - 2.0 wt.%;
- diphenylguanidine - 0.2 wt.%.
- stearic acid zinc salt - 2.8 wt.%.

Then comes mixing the components of the resulting mix with the shock-shear load on the material in the mixer-activator at a temperature of 120 °C;
After obtaining a uniform homogeneous resulting mix, it is cooled to a room temperature.

Below, there are the test results confirming the advantages of the present invention, namely, the process of manufacturing the modified crumb is low-temperature (up to 120 °C), it does not require special equipment and expensive components, and it is cost-efficient - the cost value of the modified crumb remains almost equal (comparable) with the cost of the main raw material - crumb rubber. The resulting product does not become caked, it is easy transported and suitable for long-term storage.

Table 1 shows a comparison of the characteristics of the Portuguese bitumen of 50/70 grade, improved by the addition of 14% of the crumb rubber modified by the claimed method at the mixing temperatures the bitumen of 160 °C and 180 °C. From Table 1, it is obvious that at a mixing temperature of 180 °C, the properties of the mix deteriorate significantly.

**Table 1**

| Additive type | Bitum en (%) 50/70 | Additive (%) | Viscosity (mPa•s) 175 °C | Softening temperature ≥ 55 | Penetration (0,1 mm) | Elasticity (%) | Remarks |
|---|---|---|---|---|---|---|---|
| Modified crumb rubber | 86 | 14 | 625 | 60 | 42 | 29 | 2 hours of mixing at a temperature of 160 °C |
| Modified crumb rubber | 86 | 14 | 548 | 57 | 32 | 17 | 2 hours of mixing at a temperature of 180 °C |
| Initial bitumen | 100 | 0 | 160 | 55 | 55 | 8 | Initial bitumen |

The dissolution of the modified crumb rubber in the bitumen to obtain the indistinguishable particles is provided under the mild conditions, that is, at a temperature of 160-170 °C without applying an abrasive mechanical action, which reduces significantly the cost of the required equipment and reduces the cost of the technological process; the modified rubber easily penetrates into the bitumen, and after an hour and a half, it is actually completely dissolved, forming a uniform solution of bitumen with caoutchoucs, which, although delaminated without mixing, but does not degrade, and it is absolutely suitable for long-term storage, in no way inferior in quality to the SBS-modified bitumen, which is a unique property of this mix.

The dissolution of the modified crumb rubber to obtaining the indistinguishable particles prevents rapid sedimentation and makes possible long-term storage of the resulting bitumen-rubber compositions for their further use; the possibility of storing the bitumen-rubber composition at a temperature of 160 °C is of particular interest, so, for example, when storing the mix with 10% and 14% of the modified crumb rubber during 120 hours, there is no deterioration of the indicators of the binder.

Due to the fact that the bitumen improved with the help of the crumb rubber modified by the claimed method, unlike the bitumens modified with the help of SBS or the crumb rubber, is not prone to degradation (the degradation of the bitumen mixes with the conventional crumb rubber occurs already during 4 hours) during storage (delamination due to the difference in the specific densities of the constituent materials, when stored without mixing, is possible, the similar delamination like, when storing some paints), which is similar to the bitumen behaviour with the caoutchouc additives, in this case, after such storage, it is sufficient to mix the bitumen improved by this way by a conventional paddle stirrer during 10-15 minutes at a temperature of 150-160 °C. Table 2 shows the data on the comparison of the parameters of the mix containing 10% of the modified crumb rubber (MC) immediately after the manufacture of this mix and after five days of storage.

The comparison of the characteristics of the bitumen of BND 60-90 grade, improved by adding 10% of the crumb rubber modified by the claimed method immediately after the manufacture and after 5 days of storage in a heat chamber at 160 °C and at mixing by the paddle stirrer with a speed of 350 rpm during 10 minutes every 24 hours. As can be seen from the data, the viscosity of the mix is not increasing, and the penetration becomes even slightly greater (or it is decreasing by not more than 8 units), which indicates of a uniform mix that is not prone to degradation and coking, which is ready for the use in road construction.

**Table 2**

| Indicator name | BND 60/90 | 10% of MC | Mix after 5 days of storage |
|---|---|---|---|
| Depth of needle penetration, 0.1 mm, at 25 °C | 89 | 61 | 69 |
| Ring-and-ball softening temperature, °C | 47 | 55 | 56 |
| Tension load | 0.927 | 3.408 | 2.116 |
| Elasticity, % at 25 °C | 8 | 60 | 61 |
| Dynamic viscosity at 135 °C, Pa*s | 0.24 | 1.03 | 1.12 |
| Dynamic viscosity at 160 °C, Pa*s | 0.158 | 0.43 | 0.54 |

Table 3 shows a comparison of the characteristics of the Portuguese bitumen of 50/70 grade, improved by the addition of 14% of the crumb rubber modified (MC in the Table) according to the claimed technology immediately after the manufacture and after 1, 3, 6 days of storage in the heat chamber at 160 °C and at mixing with the paddle stirrer with a speed of 350 rpm during 10 minutes every 24 hours (when stored during 6 days; however, it was not mixed at days 4^{th} and 5^{th}).

At the same time, after the first day of storage, the upper and lower layers of the bitumen mix were checked separately for delamination, and the test showed a positive result complying with the European and Russian standards. Moreover, the viscosity is increasing slightly, but at the same time, it remains within the standards.

As can be seen from the data, the quality of the bitumen is even slightly improved during storage: the softening temperature is slightly but increasing, while the penetration is becoming slightly greater. The checks by a RTOF test comply with the international and Russian standards, which indicates of a uniform mix that is not prone to degradation and coking, which is ready for the use in road construction.

**Table 3**

| Addit ive type | Bitum en (%) 50/70 | Additi ve (%) | Viscosit y (mPa•s) 175 °C | Softenin g temperat ure (St) (°C) ≥ 55 | Penetratio n (0.1 mm) | Elastic ity (%) | St after RTOF (°C) | St increase after RTOF (°C) ≤ 8 | Penetratio n (0.1 mm) after RTOF (%) | Remarks |
|---|---|---|---|---|---|---|---|---|---|---|
| MC | 86 | 14 | 625 | 60 | 42 | 29 | 65 | 5 | 28 | Mixing during 2 hours |
| MC | 86 | 14 | 275 | 54 | 35 | | | | | Mixing during 2 hours (the upper sample |
| | | | | | | | | | | - during 24 hours) |
| MC | 86 | 14 | 838 | 62 | 39 | | | | | Mixing during 2 hours (the lower sample - during 24 hours in an oven at 160 °C) |
| MC | 86 | 14 | 763 | 59 | 35 | 33 | 67 | 8 | 29 | Mixing during 2 hours + 3 days in an oven at 160 °C (mixing during 15 minutes per day) |
| MC | 86 | 14 | 1150 | 63 | 33 | 35 | 69 | 6 | 29 | Mixing during 2 hours + 6 days in an oven at 160 °C (mixing during 15 minutes per day, except for days 4^{th} and 5^{th}) |
| Initial bitum en | 100 | 0 | 160 | 55 | 55 | 8 | 60 | 5 | 38 | Initial bitumen |

| | | | | | | | | | | |
|---|---|---|---|---|---|---|---|---|---|---|
| Addit ive (%) | Bitumen (%) | Viscosity at 160 °C (mPa•s) | | | | | | | | |
| | | Time (minutes) | | | | | | | | |
| | | 5 | 15 | 30 | 45 | 60 | 90 | 120 | Remarks | |
| 1400 | 86.0 | 625 | 600 | 625 | 650 | 663 | 675 | 700 | Mixing during 2 hours | |
| 1400 | 86.0 | 838 | 738 | 700 | 688 | 688 | 675 | 675 | Mixing during 2 hours (the lower sample - during 24 hours in an oven at 160 °C) | |
| 14.00 | 86.0 | 275 | 250 | 238 | 238 | 238 | 238 | 238 | Mixing during 2 hours (the upper sample - during 24 hours in an oven at 160 °C) | |
| 14.0 | 86.0 | 763 | 788 | 813 | 825 | 863 | 875 | 888 | Mixing during 2 hours + 3 days of storing in an oven at 160 °C (mixing during 15 minutes per day) | |
| 140 | 86.0 | 1150 | 1112 | 1137 | 1200 | 1250 | 1325 | 1362 | Mixing during 2 hours + 6 days of storing in an oven at 160 °C (mixing during 15 minutes per day, except for days 4^{th} and 5^{th}) | |

The sharp unpleasant smell of rubber that occurs in the current technologies during the process of dissolving the crumb rubber in the bitumen and in the asphalt concrete mix made on its basis is eliminated; in the asphalt concrete mixes, the modified crumb rubber can be applied both by "dry" (an additive to the asphalt concrete mix during its manufacture) and "wet" (an additive directly to the bitumen) methods, in both cases, the asphalt concrete does not have the unpleasant smell.

A comparison of the chemical formulation of the samples of the atmospheric air with the emissions, when the bitumen is improved with the help of the modified crumb rubber prepared by the claimed method, and when the bitumen is improved with the help of the crumb rubber prepared by the standard technology is shown in Table 4.

The results of the chemical analysis of the indoor air. Sample No. 1 - taken during the process of improving the bitumen with the help of the modified crumb rubber. Sample No. 2 - taken during the process of improving the bitumen with the help of the crumb rubber prepared by the standard technology.

**Table 4**

| Sr. no | The components to be determined | Measurement results, mg/m³ | | (Hygienic Regulatory Standard) HRS 2.1.6.3492-17 (Maximum Permissible Concentration) MPC in the atmospheric air of populated areas, mg/ml. | (Regulatory Document) RD for test methods |
|---|---|---|---|---|---|
| | | Sample No. 1 | Sample No. 2 | | |
| 1. | Polycyclic aromatic hydrocarbons: | 0.0117 | 0,0443 | phenanthrene - 0.01** | (Guideline Document) GD |
| | 1.1. fluorene | | | anthracene - 0.01 ** | 52.04.186-89 |
| | 1.2. anthracene | <0.0001 | <0.0001 | | |
| | 1.3. pyrene | 0.0027 | 0.0016 | | |
| | 1.4. phenanthrene | 0.0036 | 0.0303 | | |
| | 1.5. fluoranthene | 0.0054 | 0.0070 | | |
| | | <0.0001 | 0.0054 | | |
| 2. | Phenol (Hydroxybenzene) | 0.0022 | 0.0034 | 0.01 | GD 52.04.799-2014 |
| 3. | Formaldehyde | 0.0084 | 0.0079 | 0.05 | GD 52.04.186-89 (Methodological Instructions) MI 4.1.619-96 |
| 4. | Dimethylbenzene (Xylene), isomer mix | 0.0229 | 0.0118 | 0.2 | GD 52.04.186-89 |
| 5. | Methylbenzene (Toluene) | 0.0684 | 0.0534 | 0.6 | MI 4.1.637-96 |
| 6. | Benzene | 0.0047 | 0.0054 | 0.3 | GD 52.04.186-89 |
| 7. | (1 -Methylethyl)benzene (Cumene) | 0.0124 | 0.0057 | 0.014 | GD 52.04.186-89 |
| 8. | Hydroxymethylbenzene (Cresol), isomer mix | 0.0040 | 0.0042 | 0.005 | GD 52.04.186-89 |
| 9. | Carboxylic ethers (by ethyl acetate) | 0.0691 | 0.0551 | 0.1 | MI 4.1.625-96 |
| 10. | SOx | 0.009 | 0.010 | 0.5 | GD 52.04.794-2014 |
| 11. | NOx | 0.002 | 0.002 | 0.2 | GD 52.04.792-2014 |
| 12. | Ethenylbenzene (Styrene) | 0.0146 | 0.0140 | 0.04 | MI 4.1.662-96 |
| 13. | Ethyl benzene | <0.0001 | 0.0016 | 0.02 | GD 52.04.186-89 |
| 14. | Vinyl chloride (Chlorethene) | 0.0068 | 0.0078 | 0.01 | GD 52.04.186-89 |
| 15. | Diphosphorus pentoxide (P₂O₅) | <0.002 | <0.002 | 0.05 | GD 52.04.186-89 |
| 16. | Mineral acids (by hydrochloride) | 0.0091 | 1.2842 | 0.2 | GD 52.04.186-89 |
| 17. | Hydrogen sulfide (dihydrosulfide) + mercaptans | 0.0064 | 0.0040 | 0.008 | GD 52.04.186-89 |

As a result of the quantitative chemical assay of the air, it was found:
- The concentration of the mineral acids (by hydrochloride) in Sample No. 2 (with the standard crumb rubber) exceeds Maximum Permissible One-Time Concentration (MPC_{OT}) by 6.421 times according to HRS 2.1.6.3492-17 and it is by 141.12 times higher than in Sample No. 1 (with the modified crumb rubber);
- The total concentration of the PAHs (polycyclic aromatic hydrocarbons) in Sample No. 2 (with the standard crumb rubber) is by 3.786 times higher than in Sample No. 1 (with the modified crumb rubber).

The quality indicators of the bitumen improved with the help of the crumb rubber modified by the claimed method are increasing significantly, in particular, the temperature range of the bitumen performance is expanding significantly, elasticity is increasing, and the bitumen adhesion to the mineral fillers of the asphalt concrete is increasing. Some quantitative characteristics of improving the quality indicators of the improved bitumen are shown in Tables 5-6.

Table 5 shows a comparison of the characteristics of the conventional bitumen of BND 60-90 grade and the same bitumen, but improved by means of the crumb rubber modified by the claimed method at the different concentrations (10% and 15%) of the additive of the modified crumb rubber (MC).

**Table 5**

| Indicator name | BND 60/90 | 10% of MC | 15% of MC |
|---|---|---|---|
| Depth of needle penetration, 0.1 mm, at 25 °C | 89 | 61 | 56 |
| Ring-and-ball softening temperature, °C | 47 | 55 | 59 |
| Tension load | 0.927 | 3.408 | 4.27 |
| Elasticity, % at 25 °C | 8 | 60 | 65 |
| Dynamic viscosity at 135 °C, Pa*s | 0.24 | 1.03 | 1.9 |
| Dynamic viscosity at 160 °C, Pa*s | 0.158 | 0.43 | 0.69 |

Table 6 shows the comparative results of the Marshall tests of the asphalt concrete mixes prepared based on the conventional bitumen of BND 60-90 grade with the use of 0.4% of cellulose and the mixes based on the bitumen of the same grade, but improved by means of the use of 12% and 14% of the modified crumb rubber.

### Example

**Table 6**

| Bitumen and bituminous mixes (binder) | Compressive strength, MPa |
|---|---|
| Bitumen of BND 60/90 grade + 0.4% of cellulose | 0.63 |
| Bitumen of BND 60/90 grade + 12% of the modified crumb | 0.76 |
| Bitumen of BND 60/90 grade + 14% of the modified crumb | 0.87 |

The positive changes in the properties of the improved bitumens lead to the situation that the asphalt concrete mixes prepared on their basis acquire increased resistance to rutting and cracking compared to the mixes based on the conventional bitumen.

Table 7 shows a comparison of the rutting characteristics for the asphalt concrete mix prepared based on the conventional bitumen of BND 60-90 grade using 0.4% of cellulose and the similar mix prepared based on the same, but SBS-modified bitumen, using cellulose as a stabilizer with the similar characteristics of the mixes based on the bitumen of the same grade, but improved by means of using 12% and 14% of the modified crumb rubber.

**Table 7**

| Bitumen and bituminous mixes (binder) | Average rut depth after 20 thousand of wheel running, mm |
|---|---|
| Bitumen of BND 60/90 grade + 0.4% of cellulose | 3.8 |
| Bitumen of BND 60/90 grade SBS-modified + 0.4% of cellulose | 2.9 |
| Bitumen of BND 60/90 grade + 12% of the modified crumb | 2.5 |
| Bitumen of BND 60/90 grade + 14% of the modified crumb | 2.2 |

In SMA and other asphalt concrete mixes, where the use of the stabilizing additives is required, the modified crumb rubber not only improves the bitumen properties, but also serves as a stabilizer, which leads to a reduction of the price for asphalt concrete. The results of the experiments for a comparison of the properties of different mixes in terms of the level of their draindown in the SMA are shown in Table 8.

Table 8 shows a comparison of the characteristics of the draindown of the binder in SMA using the bitumen of BND 60-90 grade using 0.4% of cellulose and the similar mix prepared based on the same, but SBS-modified bitumen, using cellulose as a stabilizer with the similar characteristics of the mixes based on the bitumen of the same grade, but improved by means of using 12% and 14% of the modified crumb rubber.

**Table 8**

| Bitumen and bituminous mixes (binder) | Experiment No. 1 | Experiment No. 2 | Mean value |
|---|---|---|---|
| Bitumen of BND 60/90 grade | 0.87 | 0.79 | 0.83 |
| Bitumen of BND 60/90 grade SBS-modified | 0.63 | 0.32 | 0.475 |
| Bitumen of BND 60/90 grade + 0.4% of cellulose | 0.07 | 0.089 | 0.0795 |
| Bitumen of BND 60/90 grade + 12% of the modified crumb | 0.16 | 0.09 | 0.125 |
| Bitumen of BND 60/90 grade + 14% of the modified crumb | 0.042 | 0.03 | 0.036 |

## Claims

1. A method for manufacturing modified crumb rubber, comprising
- preparing a mix from the following components: crumb rubber from used automotive and tractor tires with a particle size of up to 1 mm - 50-65 wt.%, oxides and/or hydroxides of alkaline-earth metals - 10-20 wt.%, petroleum oil of solvent refining with the viscosity of from 0.05 to 1.5 Pa•s at 60 °C - 20-30 wt.%, an amine type antiageing agent - a heterocyclic nitrogen-containing compound - 0.1-2.0 wt.%;
- mixing the components of the resulting mix with a shock-shear load on the material in a mixer-activator at a temperature of 80-120 °C; and
further cooling the resulting mix to a room temperature.

2. The method according to claim 1, wherein the oxides and the hydroxides of the alkaline-earth metals are selected from a group of CaO, MgO, Ca(OH)₂.

3. The method according to claims 1-2, wherein an amine-type antiageing agent is selected from a group of the heterocyclic nitrogen-containing compounds, in particular, neozone D, irganox, and diafene FP.

4. The method according to claims 1-3, wherein the mix contains additionally a vulcanization accelerator of a guanidine class selected from a group of guanidine, diphenylguanidine in an amount of 0.2-5.0 wt.%.

5. The method according to claims 1-4, wherein the mix contains additionally a vulcanization activator selected from a group of stearic acid, oleic acid and the zinc and calcium salts thereof in an amount of 2.0-3.0 wt.%.
